# EUROPEAN PATENT APPLICATION

(11) **EP 1 014 630 A2**
(43) Date of publication of application: **28.06.2000**
(21) Application number: 99310183.1
(22) Date of filing: 17.12.1999
(51) Int. Cl.: H04L 12/58, H04M 3/533

(54) **Local and remote notification of messages waiting and automatic retrieval of such messages**

(30) Priority: 23.12.1998 US 220075
(71) Applicant: NORTEL NETWORKS CORPORATION, Montreal, Quebec H2Y 3Y4 (CA)
(72) Inventor: Smith, Anthony Hamilton, Calgary, Alberta, T2S 0L9 (CA); Bleile, Leonard George, Calgary, Alberta T2B 3H3 (CA); Buckler, Brian Lawrence, Calgary, Alberta, T2K 0G4 (CA)
(74) Representative: Maury, Richard Philip

(57) **Abstract**

Systems, apparatus and methods for providing an indication of messages available from at least one messaging platform to a communications subscriber are disclosed. The systems include a message signal receiver for receiving, from at least one messaging platform, a message signal representing at least one of quantity, type and content of messages available for at least one subscribing customer. The systems further include a message waiting signal transmitter for transmitting a message waiting signal representing at least one of quantity, type and content of messages available at a messaging platform to the subscribing customer. The systems also include a telephony device. The telephony device includes a message waiting signal receiver for receiving the message waiting signal. The telephony device further includes a message indicator in communication with the signal receiver for providing an indication of at least one of quantity, type and content of messages at a messaging platform to a user of the telephony device.

## Description

### BACKGROUND OF THE INVENTION

### 1. Field of the Invention

This invention relates to apparatus and methods for locally and remotely notifying a messaging service subscriber of messages available at the messaging service and automatic retrieval of such messages in response thereto. More particularly, it relates to providing a user with an indication of at least one of type, quantity and content of an available message and automatically retrieving such messages.

### 2. Description of Related Art

Messaging services are currently provided to subscribers through a central office. Such services may include voice mail, for example. However, other services such as email, for example, are being introduced into the telephone market.

Presently, with voice mail service providers, when a voice mail message for a subscriber has been received by the central office, the central office transmits a message to the subscriber's telephone to indicate that a central office based message has been received and is ready for pickup. However, if multiple messages have been received, the user receives no indication of how many have been received. Furthermore, with the introduction of additional messaging services into the telephone market, and with the provision of such messaging services through a single central office common to a plurality of messaging service providers, the simple indication that a central office message has been received is insufficient to provide a user with the information required to determine the need or urgency with which the messages must be retrieved.

Furthermore, with the increasing mobility of telephone users, a user cannot always rely on being near a telephone to pick up messages. Rather, many are employing cellular telephones or pagers to receive messages. What would be desirable therefore is a way of notifying a user about message availability and even the content of the message, especially in the case of an email message, at a telephone connected to the central office or even at a remotely located pager.

Simple notification of pending messages may not however be enough for some users. Some may not be able to receive notification and establish contact with the messaging services provider to get such messages. Therefore in addition to remote notification it would also be desirable to have some way of eliminating the need for a user to actively retrieve his messages.

### SUMMARY OF THE INVENTION

This invention addresses the above needs by providing an apparatus and method for locally and remotely notifying a messaging service subscriber of messages received for the subscriber at one or more messaging services. In particular, it provides the subscriber with an indication of the quantities and types of messages that await him. The indication may be received from a messaging service and transmitted in a message waiting signal to the subscriber's equipment. In response, the subscriber's equipment displays the indication. The indication may additionally include the source of the message, or even the content of at least part of the message, in which case the subscriber's equipment displays the source and/or content of the message. The subscriber's equipment may also be configured to forward the indication to a paging service provider, which in turn will forward the indication to a pager. For example, the indication received at the subscriber's equipment may contain some or all of the content of an electronic mail (email) message, and the subscriber's equipment may be configured to forward the content of the email message to a paging service provider, which will then forward the email message to the subscriber's pager for display thereon.

In accordance with one aspect of the invention, there is provided an apparatus including a message indication receiver and a message waiting signal transmitter. The message indication receiver receives, from at least one messaging platform, a message signal indicating at least one of quantity, type and content of messages available for at least one subscribing customer. The message waiting signal transmitter transmits a message waiting signal representing the quantity, type and/or content to the subscribing customer.

In accordance with another aspect of the invention, there is provided a telephony device which includes a message waiting signal receiver and a message indicator in communication with the message waiting signal receiver. The message waiting signal receiver includes a processor circuit for determining the quantity, type and/or content of messages available at the messaging platform from the message waiting signal. The message indicator provides an indication of the quantity, type and/or content of the message to a user of the telephony device.

In accordance with yet another aspect of the invention, there is provided a system including the apparatus and the telephony device described above.

In accordance with still other aspects of the invention, there are provided methods carried out by the apparatus described above, but which may be carried out by other apparatus.

In addition, elimination of the need for a user to actively retrieve messages is provided by automatically retrieving messages from a messaging platform in response to a notification of a pending message from such messaging platform.

In accordance with another aspect of the invention, there is provided an apparatus having a signal receiver and a communications device. The signal receiver receives a message waiting signal representing messages available from at least one messaging platform and the communications device establishes communications with the messaging platform to receive the message in response to the message waiting signal.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

In drawings which illustrate embodiments of the invention,
- Figure **1**: is a schematic representation of a system for notifying a messaging service subscriber of messages available at a messaging service, according to a first embodiment of the invention;
- Figure **2**: is a fragmented schematic representation of a data packet message structure of an indication of messages available, according to the first embodiment of the invention;
- Figure **3**: is a schematic representation of an analog display services interface message structure, according to the first embodiment of the invention;
- Figure **4**: is a block diagram of a telephony device, according to the first embodiment of the invention;
- Figure **5**: is a flowchart representing a message handler algorithm run by the telephony device shown in Figure **4**;
- Figure **6**: is a flowchart representing an augmented message handler algorithm run by the telephony device shown in Figure **4**;
- Figure **7**: is a schematic representation of a system for notifying a message service subscriber of messages available at a messaging service, according to a second embodiment of the invention;
- Figure **8**: is a schematic representation of a system for notifying a message service subscriber of messages available at a messaging service, according to a third embodiment of the invention; and
- Figure **9**: is a schematic representation of a system for retrieving messages in response to a message notifying a telephony device that a message is available.

### DETAILED DESCRIPTION

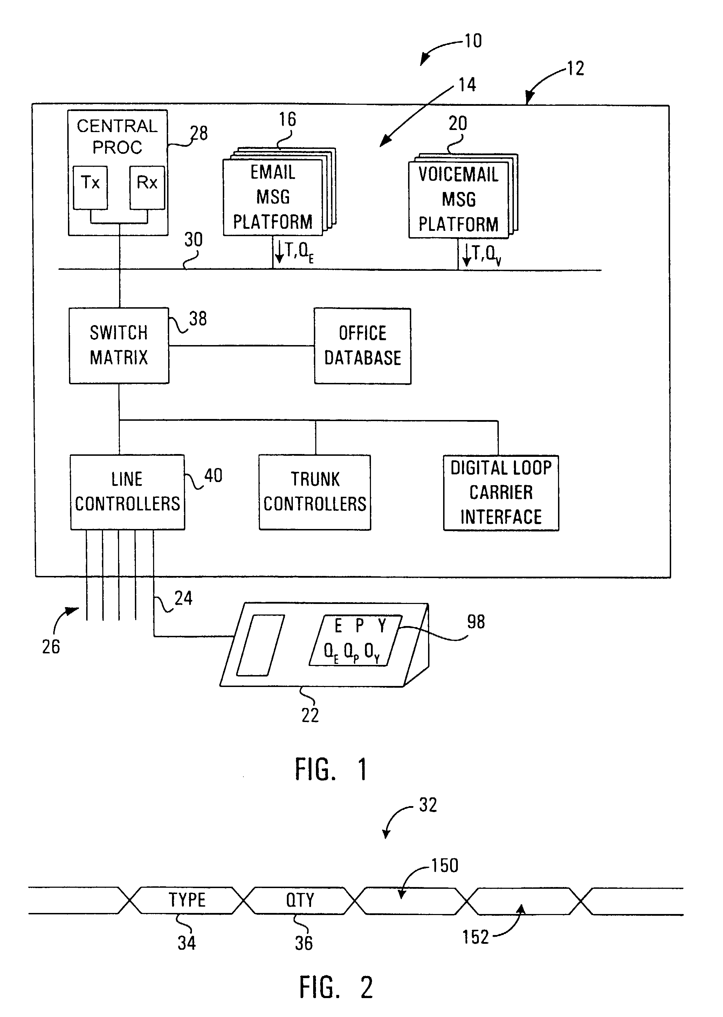

Referring to Figure **1**, a system for notifying a messaging service subscriber of messages available at a messaging service is shown generally at **10**. In this embodiment, the system includes a central office shown generally at **12** having a plurality of messaging platforms shown generally at **14**, including an email messaging platform **16** and a voicemail messaging platform **20.**

The system further includes a telephony device **22** connected to the central office **12** by a conventional 2-wire tip/ring telephone line **24**.

In this embodiment, the central office **12** also has a plurality of other telephone lines **26** for providing telephony services to other subscribers.

In use of the invention, one or more subscribers may make a call to the telephony device **22** by initiating such call on one of the telephone lines **26**. In the event that a user of the telephony device **22** is not available or chooses not to answer, processing circuitry within the central office may detect that the telephony device **22** has been rung a number of times and redirect the incoming call to one of the messaging platforms **16** or **20.** In the case of a conventional calling party, the party may be prompted to leave a voice message, in which case such message is received at the voicemail messaging platform **20.**

Similarly, an email message may be received on one of the plurality of telephone lines **26** from an Internet services provider or other email providing service and such email would be stored at the email messaging platform **16.**

Effectively, the email messaging platform **16** and the voicemail messaging platform **20** accumulate messages from calling or sending parties on telephone lines **26** for telephone service subscribers subscribing to one or both of the messaging platform services.

At each messaging platform **16** and **20**, messages received for a particular subscriber are counted and stored in a database associated with the particular subscriber.

As messages are received and counted, the respective platforms provide a message signal along a messaging bus **30** to a central processor **28** of the central office **12.** The message signal represents at least one of quantity and type and content of messages available for at least one subscribing customer. The central processor thus acts as a message indication receiver for receiving a message waiting signal from at least one messaging platform.

The central processor **28** receives respective message signals or indications from each of the respective messaging platforms. In effect therefore, the central processor **28** acts as a message signal receiver for receiving from the messaging platforms, message signals representing messages available for at least one subscribing customer. In other words, the messaging platforms provide to the central processor **28** message signals representing messages available at a messaging platform.

Such message signals, in this embodiment, include data packets as shown generally at **32** in Figure **2**, including a type field **34** and a quantity field **36** for holding codes representing the type and quantity of messages available to the subscriber at the corresponding messaging platform from which the data packet **32** was issued. Other protocols for transmitting such codes would work equally well.

The central processor **28** receives the data packet **32** and reads the contents of the type and quantity fields **34** and **36** to determine from the data packet, or in other words, to determine from the message signal from each messaging platform, the quantity and type of messages available.

The type field **34** may, in general, hold codes identifying the type of platform at which messages are available, such as email, voicemail, or any other type of messaging platform. Alternatively, however, the type field may identify the particular platform at which messages are available. This is particularly useful where more than one email messaging platform is provided, for example.

After receiving a data packet of the type shown at **32** in Figure **2**, the central processor **28** formats a control message in accordance with control message protocols of the central office and forwards such message through a switch matrix **38** of the central office to a line controller selected from a group of line controllers **40.** The line controller receives the control message and activates the telephone line **24** to transmit a message waiting signal to the telephony device **22.** The message waiting signal represents the indication of messages available to the corresponding subscribing customer.

The control message provided by the central processor to the line controller is formatted such that the message waiting signal produced by the line controller includes an indication of the quantity and type of message available from the platform which has just received a message. Thus, the line controller acts as a transmitter for transmitting a message waiting signal to a remote device for notifying a subscribing customer of at least one of quantity and type of messages available at a messaging platform.

The message waiting signal produced by the line controller may be in any suitable format but, preferably, is a Frequency Shift Keyed (FSK) signal formatted in accordance with the Multiple Data Message Format (MDMF) or the Analog Display Services Interface (ADSI) Data Messaging Format (ADMF).

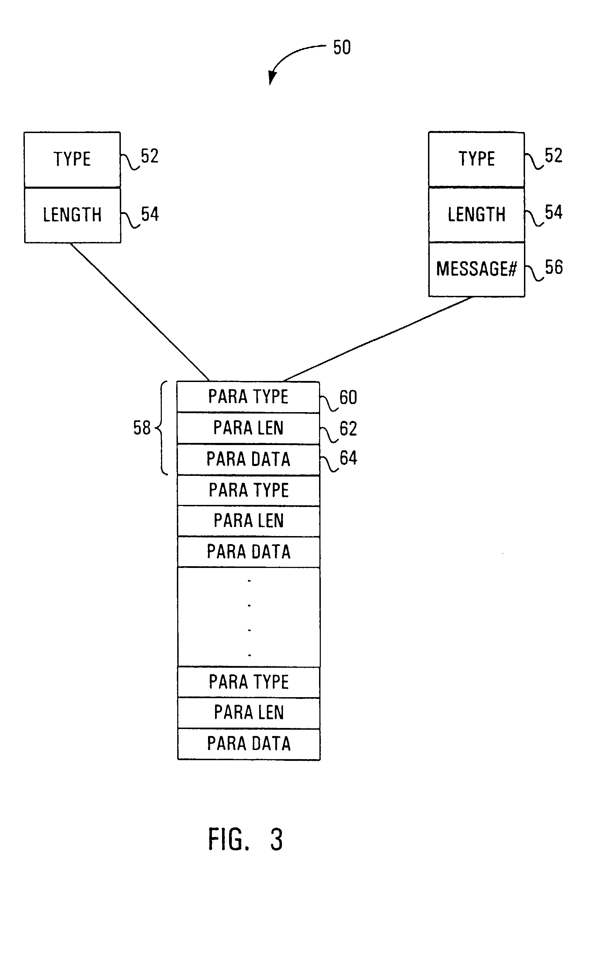

In this embodiment, the ADMF messaging format is used and, in this regard, the message waiting signal produced by the line controller is formatted in an ADSI message structure as shown at **50** in Figure **3**.

It will be appreciated that the message structure is different as between Type I or II and Type III customer premises equipment. Type I and II customer premises equipment ADMF and MDMF messages include type and length fields **52** and **54,** whereas Type III equipment ADSI messages have type and length fields **52** and **54** and also a message number field **56.**

The remainder of the ADSI message is common to each of the three types of customer equipment and includes a first data unit **58** including a parameter type field **60,** a parameter length field **62** and a parameter data field **64.** It will be appreciated that a plurality of data units may follow the first data unit **58.**

In this embodiment, the parameter type field **60** is used to hold a parameter type byte, not previously defined in existing MDMF messaging formats. In this embodiment for example, the parameter type is identified as relating to an indication from a messaging platform and has the value H6C, for example.

The parameter length field **62** identifies the length or number of bytes of data which are to follow in the parameter data field **64.**

The parameter data field **64** is used to hold data representing the indication of the quantity and type of messages available to the subscriber from the central office. In other words, in this embodiment, the parameter data field **64** holds at least the contents of the type field **34** and quantity field **36** shown in Figure **2**.

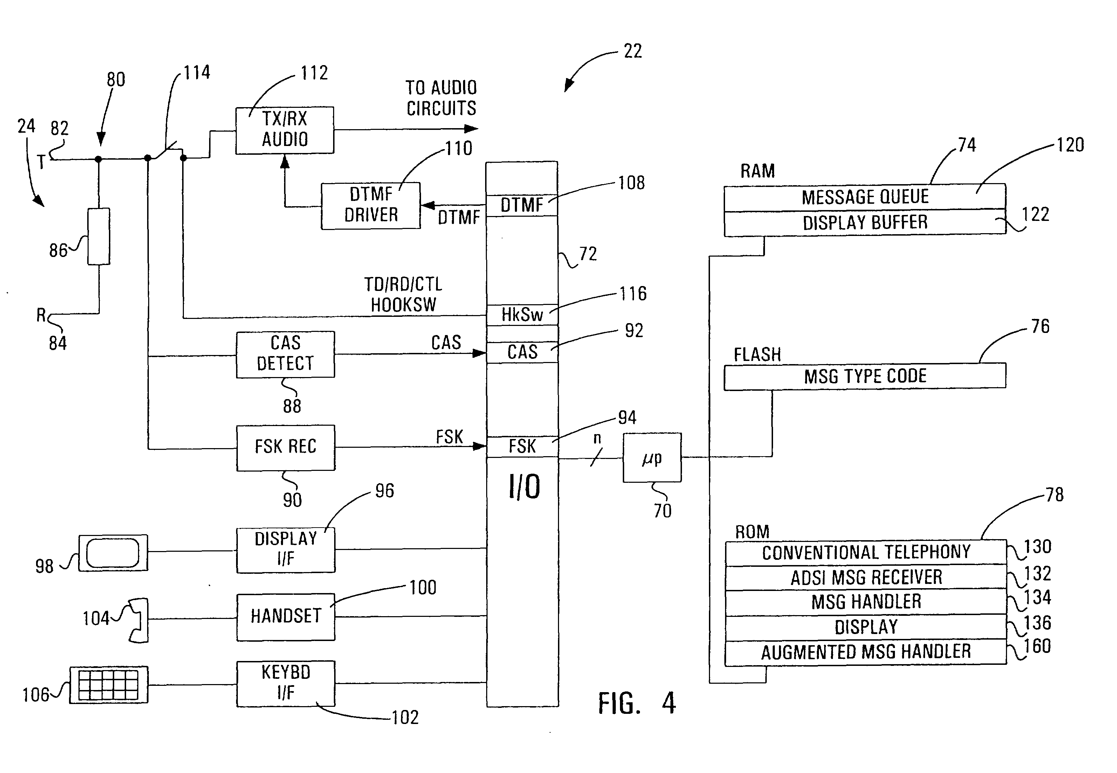

Referring to Figure **4**, a block diagram of the telephony device is shown generally at **22**. The telephony device includes a processor circuit including a microprocessor **70**. The microprocessor **70** is connected to an I/O circuit **72,** Random Access Memory (RAM) **74**, FLASH memory **76** and Read Only Memory (ROM) **78**.

The telephony device further includes a telephone line interface shown generally at **80** including terminals **82** and **84** for connection to tip and ring conductors of the telephone line **24**. A line termination circuit **86** is connected between the tip and ring terminals, and a Customer Premises Equipment Alerting Signal (CAS) detector **88** and an FSK receiver **90** are connected to the tip and ring terminals so as to receive Customer Premises Equipment Alerting Signals and FSK signals for receiving the signal representing the message waiting from the central office. The FSK receiver **90** provides digital values in the FSK receive register **94** which are readable by the microprocessor **70** to acquire individual bytes of ADSI messages so received.

The I/O circuit **72** is further in communication with a display interface **96** and a display **98** to enable the microprocessor to provide data to the display interface **96** to create an image on the display **98.** The display acts an indicator for providing an indication of at least one of quantity, type and content at least one of the messages available.

The I/O circuit is further in communication with a handset interface **100** and a keyboard interface **102** which are connected to a handset **104** and a keyboard **106** respectively.

The I/O circuit **72** further has a DTMF register **108**, the contents of which are used to control a DTMF driver **110** in communication with a transmit/receive audio circuit **112,** selectively connectable to the telephone line **24** by a hookswitch **114** controlled by the contents of a hookswitch control register **116** writable by the microprocessor **70.**

The RAM **74** includes a message queue **120** and a display buffer **122.** The message queue **120** includes a first in, first out (FIFO) buffer and is operable to receive successive messages of the type shown in Figure **3**. The display buffer **122** is also a FIFO buffer and is operable to receive codes for controlling the display **98** through the display interface **96.**

The ROM **78** includes codes for directing the microprocessor **70** to execute a telephony routine **130**, an ADSI message receiver routine **132**, a message handler routine **134**, a display routine **136** and an augmented message handler routine **160.**

The telephony routine **130** and the ADSI message receiver routine **132** are well known in the art. The telephony routine controls the microprocessor to direct the DTMF driver **110**, handset interface **100** and keyboard interface **102** to cause the telephony device to provide telephony functions.

The ADSI message receiver routine **132** serves to receive messages at the FSK receiver **90** and accumulate bytes of such messages in the message queue **120**. Specifically, when ADMF messages of the type described above are received at the FSK receiver **90,** the ADMF messages are decoded by the FSK receiver. Decoded bytes of the ADMF messages are stored in the FSK receive register **94** of the I/O circuit **72**. The ADSI message receiver routine directs the processor circuit (i.e. the microprocessor **70**) to accumulate the decoded bytes of the ADMF messages in the message queue **120** in the RAM **74.** Thus, when an incoming ADMF message contains in its parameter data field **64** an indication of messages available at a messaging platform, as shown at **32** in Figure **2**, the FSK receiver, I/O circuit, processor circuit and RAM act as a signal receiver for receiving the message waiting signal.

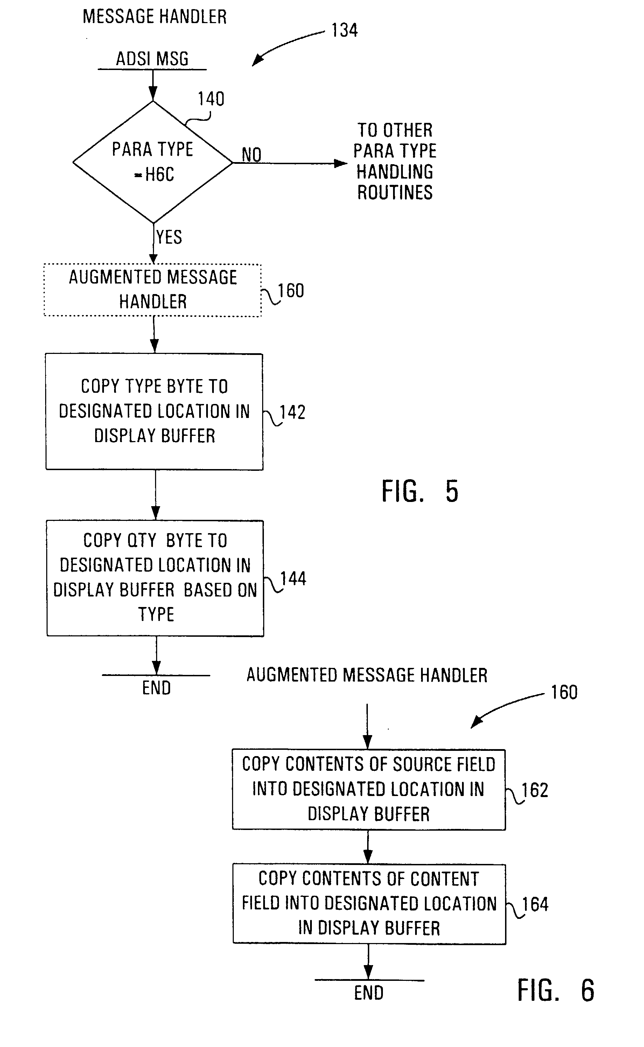

As shown in Figure **5**, the message handler routine is designated generally by the reference character **134**. The message handler routine **134** is invoked by the microprocessor **70** upon receipt of an ADSI message notification from the ADSI message receiver routine **132.** The message handler routine includes a first block **140** which directs the microprocessor **70** to read the contents of the parameter type field **60** of the ADSI message stored in the message queue **120** to determine whether or not such contents are equal to H6C, for example. If the contents are not equal to this value, the microprocessor **70** is directed to other message handler routines, not part of this invention.

If on the other hand, the contents of the parameter type field are equal to H6C, block **142** directs the microprocessor to read the contents of the parameter data field **64** of the ADSI message stored in the message queue **120**, and more specifically, to read the portion of the parameter data field **64** containing the contents of the type field **34** shown in Figures **2** and **3**, to determine the type of message.

On determining the type of message, block **142** directs the microprocessor **70** to copy the contents of the type field **34** from the parameter data field **64** to a designated location in the display buffer **122** as determined by the contents of the type field. In other words, for each possible type of messaging platform, there is a designated location on the display **98** at which an indication of such type is displayed. The designated location for each type of messaging platform may be the same, in which case, the message types are prioritized.

After copying the contents of the type field **34**, block **144** directs the microprocessor to read the contents of the corresponding portion of the parameter data field **64** holding the contents of the quantity field **36**, to determine the quantity of messages available from the corresponding messaging platform. Block **144** further directs the microprocessor to copy the contents of the quantity field **36** to a corresponding designated location in the display buffer, the designated location being based on the contents of the type field **34** as above.

In this way, referring back to Figure **1**, the display may indicate the letters "E" and "V" on a first line of the display **98** to represent email and voicemail messaging platforms respectively and may represent corresponding quantities of messages directly beneath the letters E and V to indicate the quantities of messages stored at each respective messaging platform.

In this manner, the display **98** acts as a message indicator for providing an indication of messages available for the subscribing customer. In other words, the display is controlled by the processor circuit to display at least one of quantities and types of messages available from each of the messaging platforms.

The invention may be extended to include the ability to forward the message waiting signal or portion thereof or at least indications of messages available on any or all of the messaging platforms to a remote device such as another telephony device or a paging services provider, for example. Referring to Figure **4**, to forward at least a portion of the message waiting signal to a paging services provider, for example, the microprocessor **70** is directed to format the contents of the type and quantity fields **34** and **36** from the parameter data field **64** into a Telocator Alphanumeric Protocol (TAP) format and to activate the DTMF driver **110** and hookswitch **114** to make a call to the paging services provider and provide the TAP message thereto for presentation on a pager. In other words, the telephony device communicates the indication of messages available to a subscriber of a paging services provider.

Referring back to Figure **1**, many messaging platforms are able to use calling line identification information provided in a call made to the messaging platform to determine the source of the message. An indication of such source of the message is associated with the corresponding message and such indication of the source is made available to the subscriber. Typically, in the case of the voicemail messaging platform **20,** the source of the message could be identified by calling line identification information. In the case of the email messaging platform, the source of the information may be indicated by calling line identification information if the email message is received by MDMF messaging or ADMF messaging; however, it may alternatively be provided by a sender header in a simple mail transfer protocol (SMTP) message sent from an email provider.

Thus, it is an additional feature of the invention that any of the messaging platforms may additionally provide, in addition to type and quantity information in the data packet shown in Figure **2**, source information which may include calling line identification information. Such information may be provided by a messaging platform as additional bytes in a source field represented generally at **150** in Figure **2**. In addition, the messaging platforms may provide further bytes in the content field **152**, such bytes representing at least some content and possibly the entire content of the message just received at the corresponding messaging platform. Such content may include calling line identification information or may include part or all of the message itself, particularly in the case of an email message.

In the case where the data packets from the messaging platforms include the source and/or content fields **150** and **152**, the central processor **28** thus determines the source and content from the indication provided by the messaging platform and provides appropriate signals to the line controllers **40** to include in the signal transmitted to the telephony device, a representation of the source or the content of the message received at the messaging platform. In this embodiment, the contents of the source field **150** and content field **152** of the data packet **32** sent by a messaging platform are included by the line controllers in the parameter data field **64** of the ADSI message received in ADSI Data Message Format by the telephony device **22.**

Thus, the central processor **28** and line controllers **40** act as a message waiting signal indication transmitter operable to include in the message waiting signal at least one of quantity, type and content of at least one message available at at least one messaging platform. Alternatively, rather than transmitting separate source and content fields, the "at least some content" may include the source of the message: for example, the content may include the sender header of an email message.

In the above manner, the transmitter is operable to include the calling line identification information in the message waiting signal.

When an ADSI message as described above is received at the FSK receiver **90** of the telephony device **22,** it is decoded and stored in the message queue **120**, as described above in the context of the ADSI message receiver routine **132**, with the FSK receiver, I/O circuit, microprocessor and RAM effectively acting as a message waiting signal receiver for receiving the message waiting signal.

At the telephony device, to handle the additional information provided by the source and content fields, the ROM contains an augmented message handler routine **160** which is run subsequent to block **144** in the first message handler routine **134.** The augmented message handler routine is shown generally at **160** in Figure **6** and includes a first block **162** which directs the microprocessor to read the contents of the source field **150** from the parameter data field **64** of the ADSI message now stored in the message queue **120**, to determine the source of the message. Block **162** further directs the microprocessor to copy the contents of the source field into a designated location in the display buffer, the location being determined by the contents of the type field **34.** Block **164** directs the microprocessor to read the contents of the content field **152** from the parameter data field **64** of the decoded ADSI message stored in the message queue, to determine at least some content of a message available at the messaging platform from which the indication originated. Block **164** further directs the microprocessor to copy the contents of the content field into a further designated location in the display buffer, as determined by the contents of the type field **34**. Thus, the signal receiver includes a processor circuit programmed to determine at least some content of a message available at the messaging platform and for determining the source of the message. The augmented message handler routine is then ended.

It will be appreciated that the display **98** may have a limited size and, therefore, may only be able to display a limited number of characters at a time. In this event, the microprocessor arranges the RAM to have respective FIFO buffers for the contents of the source field **150** and the contents of the content field **152** so that the contents of these fields may be scrolled in the usual manner. Thus, the processor circuit determines from the ADSI message, or in other words, from the message waiting signal provided by the central office, at least some of the content of the actual message stored at the messaging platform. Furthermore, at least some content of the message stored at the messaging platform is displayed on the display at the telephony device. In addition, the source of the message is determined from the indication and is displayed on the display.

In this way for example, at least some content of an email message received at the email messaging platform **16** may be displayed at the telephony device. The content could include the first one thousand characters of the email message, for example.

To further extend the invention, the interaction with the paging services provider as described above, may be extended to include transmitting in the TAP message sent to the paging services provider, an indication of the source of the message and/or at least some of the content of the message for display on a pager.

As an illustrative example, upon receipt of an email message for a subscriber at the email messaging platform **16**, the central processor **28** may forward a control message to the line controllers **40**, causing the line controllers to transmit to the subscriber's telephony device an ADSI message. The parameter data field **64** of the ADSI message includes, in addition to type and quantity, the contents of the source and content fields **150** and **152,** the content field **152** containing the first one kilobyte of characters of the email message itself, for example. The telephony device may then format the contents of the content field into the telocator alphanumeric paging (TAP) protocol, dial the telephone number of the subscriber's paging services provider, and forward the TAP message to the paging services provider. The paging services provider then forwards the email message to the subscriber's pager, for display thereon.

The invention may be further extended to include a user-programmable lookup table of "preferred" sources, from which received messages are allowed to invoke the paging function. To achieve this, the processor circuit is programmed to determine a source of the message waiting signal, by reading the source filed **150**. The identity of the source of a message is compared against the lookup table to determine whether the source is a preferred source. If so, the paging function is invoked; if not, no page is sent. This allows the user to selectively receive messages when the source meets a pre-specified condition. In general, therefore, the processor circuit acts to selectively invoke the paging function in response to at least part of the message waiting signal.

Additionally, the lookup table may associate paging numbers with sources, so that when a message from a particular source is received, the telephone number of a paging service associated with that source is used in dialling the paging service. This is particularly advantageous where more than one user shares the same subscription to a messaging service, as the pager numbers of each user can be associated with respective sets of sources associated with respective users.

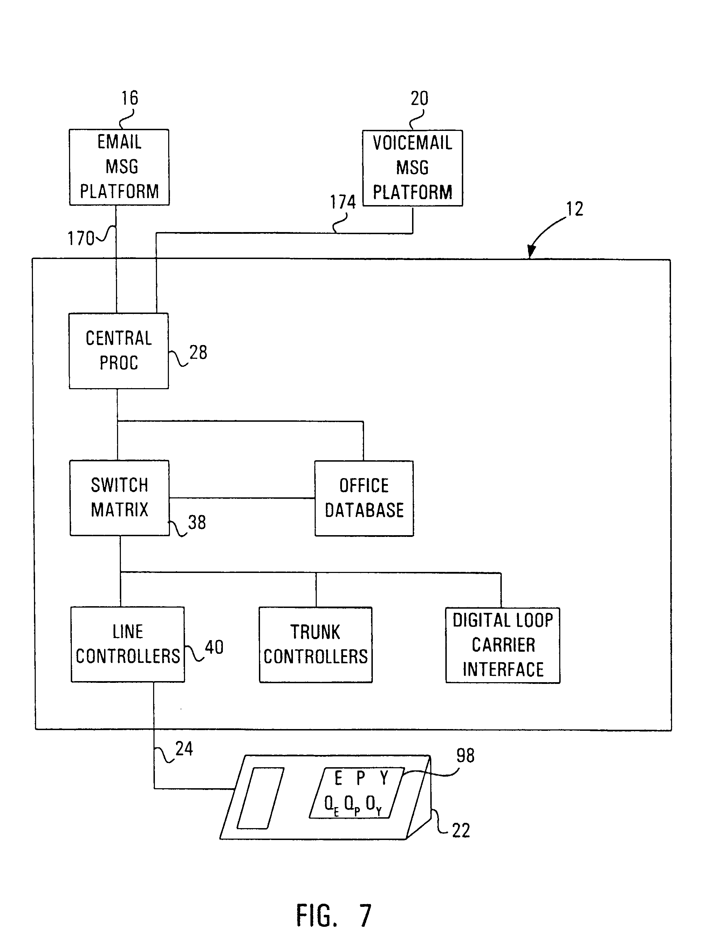

Although a system has been shown in which messaging platforms are provided within the central office **12**, such messaging platforms may be located external to the central office **12** as shown in Figure **7**. In this embodiment, each individual messaging platform **16** and **20** is separately connected directly to the central processor **28** of the central office **12** by separate data lines **170** and **174** respectively. Such data lines may be high speed data lines, especially where there is a large volume of traffic between respective messaging platforms and the central processor **28.**

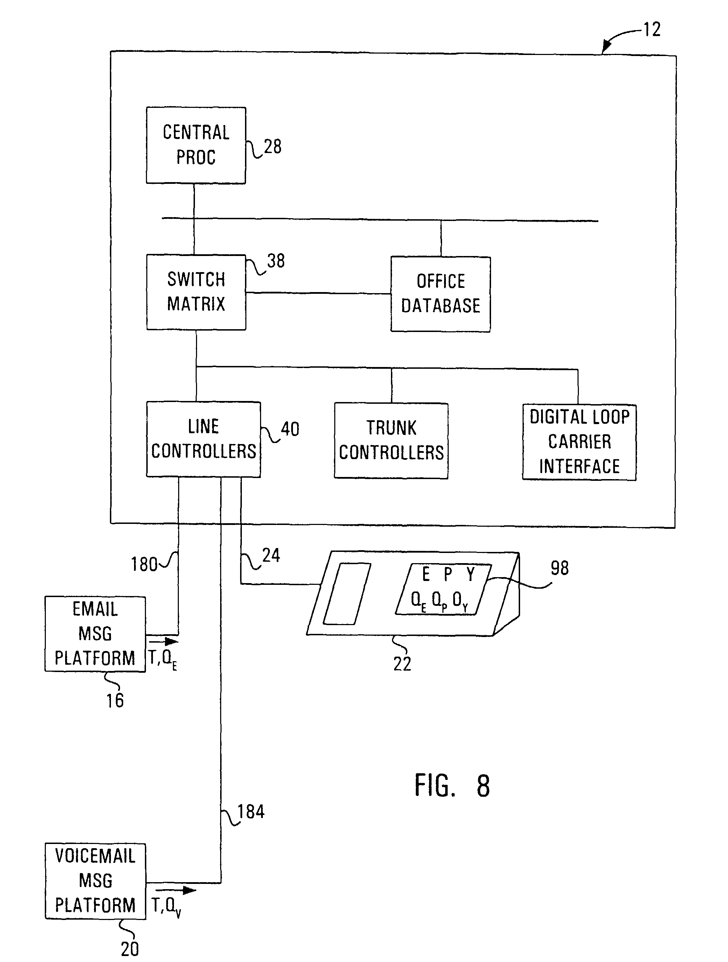

Systems have been shown herein in which the messaging platforms are in direct communication with the central processor **28** in the central office, with the central processor acting as the message indication receiver for receiving from the messaging platforms respective indications of messages available for at least one subscribing customer. However, a further alternative embodiment is shown in Figure **8** in which the messaging platforms **16** and **20** are connected to the line controllers **40** of the central office **12**. The messaging platforms are connected to respective line controllers by conventional telephone lines **180** and **184**, and communicate with the telephony device **22** through the switch matrix **38** of the central office in the same manner as that in which a conventional telephone call is made. In this embodiment, the line controllers connected to respective telephone lines **180** and **184** act as message indication receivers for receiving message signals representing messages available for subscribing customers from each respective messaging platform, in addition to acting as message waiting signal transmitters.

In the embodiments shown and described above, it has been contemplated that upon receipt of a message at a messaging platform, the messaging platform immediately attempts to send a message signal to cause a message waiting signal to be transmitted to the subscriber, through the central office. While this is possible, it may alternatively be desirable to make the respective messaging platforms **16** and **20** responsive to DTMF codes or MDMF messages sent from the telephony device **22** to provide such indications of waiting messages, in response to a request from the telephony device **22**.

In addition, rather than forwarding notification of messages waiting, upon receipt of the data packet **32** shown in Figure **2**, and after determining the type of message, the processor may establish communication with the messaging platform on which a message is waiting and request that the waiting message be downloaded to the telephone. Such communications may be established by dialling a predefined telephone number corresponding to the desired messaging platform, using the DTMF dialler. Requests to cause such downloads to occur will be defined by the particular messaging service used. In the case of an email message, such downloading may be accomplished where the telephony device includes a modem and communications routines rendering the telephony device operable to act as a web or ADSI telephone operable to conduct conventional telephone calls and operable to communicate with an Internet services provider or ADSI services provider, for example.

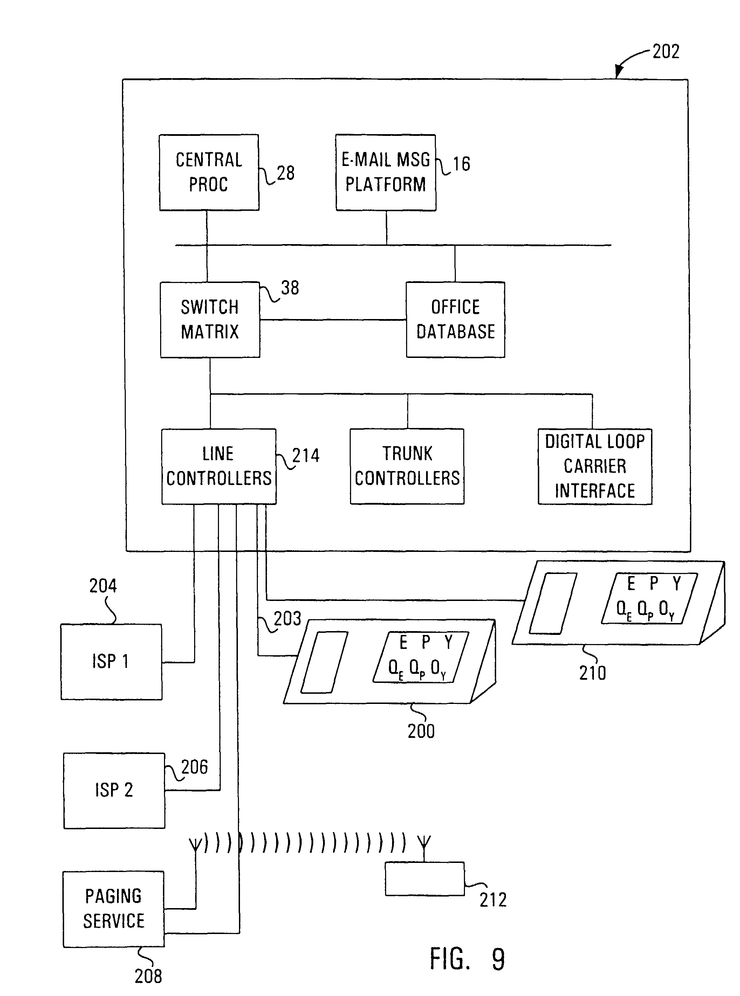

Referring to Figure 9 a telephony device of this type is shown at **200** and is connected to a central office shown generally at **202** by a telephone line **203.** In addition, first and second Internet services providers **204** and **206** a paging service **208** and a second user telephony device **210** are connected to respective line controllers of the central office **202.**

The first and second Internet services providers (ISPs) **204** and **206** are operable to provide email services to subscribers, one of which is a user of telephony device **200**. In addition, the central office **202** includes the internal email messaging platform **16** described above.

The telephony device **200** has circuitry and software which allows it to communicate with the first or second Internet services providers **204** and **206**, using conventional telephone lines, to receive email according to the standard for the format of ARPA Internet Text Messages as disclosed in RFC **822** dated August 13, 1982, wherein email received in this manner is stored in an email directory (not shown). Similarly, the telephony device **10** can receive email from the email messaging platform **16** through the central office in a Multiple Data Messaging Format (MDMF) or ADSI Data Messaging Format (ADMF) signalling format. Thus, the telephony device **200** can receive email by two different methods.

Upon receipt of email, the telephony device **200** is operable to transmit at least a portion of it to one of the ISP(s) **204** or **206,** the paging service **208** for display on a remote pager **212** or to transmit the email to the second user telephony device **210** for display thereon.

Alternatively, an email may be received in an ADSI message provided on the telephone line **203**. Referring back to Figure **9** and as described above, the email messaging platform **16** may receive an email using standard protocols, from one of the Internet services providers **204** or **206** and store such email locally within the central office. The email platform then communicates with the central processor **28** of the central office to produce an MDMF or ADMF message, for example. Assume an ADMF message is produced, in which case an ADSI message in an FSK signalling format is produced at a line controller **214** connected to the telephony device **200.** In this manner, ADSI messages, including at least a portion of the email from the email messaging platform **16** are communicated to the telephony device **200.**

FSK signals representing ASDI messages are received at an FSK receiver and provided to a telephony microcontroller. The telephony microcontroller runs an ADSI message receiver. A mechanism for receiving ADSI messages at a telephone is described above.

Effectively, the ADSI message receiver deposits in a ADSI message buffer (not shown) an ADSI message containing at least a portion of an email.

Upon receipt of an ADSI message containing email or a portion thereof, the contents of the parameter data field of each data unit are pieced together to reconstruct (if necessary), the entire email into a form in which it would have been received if it were retrieved directly from one of the Internet services providers **204** or **206** shown in Figure **9**. The reconstructed email is stored in the email directory in the telephony device. Thus, in effect, all email, whether received directly from an Internet services provider or whether received in an ADSI message, is stored in the email directory complete.

The email so retrieved and stored, may then be formatted into the Telocator Alphanumeric Paging (TAP) protocol format and a call may be made to a paging services provider to provide a TAP message thereto for presentation on a pager. In other words, the telephony device can also communicate the email to a subscriber of a paging service.

In the case of a voice message, the telephone may be equipped with an answering machine for recording voice messages. In this case, the telephone automatically executes a pre-defined DTMF sequence understandable by the voice messaging platform to cause the messaging platform to play the message to the telephone. As the message is played, the telephone records the message using the answering machine. The previously described signal may then be sent to the remote device to provide notification that a voice message is available. The user may then dial the telephone and retrieve the voice message directly from the telephone without using the voice messaging service. In this scenario, the telephone may keep the message or destroy it, and such choices may be pre-defined by a user of the telephone.

Alternatively, after receiving the voice message, either the content of the message or an indication that the voice message is available may be transmitted to a paging service. Where the notification signal includes identification of the source of the message such as by calling line identification information such information may alternatively or additionally be provided to the paging service.

While specific embodiments of the invention have been described and illustrated, such embodiments should be considered illustrative of the invention only and not as limiting the invention as construed in accordance with the accompanying claims.

## Claims

1. A method comprising:
a) receiving from at least one messaging platform a message signal representing at least one of quantity and type and content of messages available for at least one subscribing customer; and
b) transmitting a message waiting signal to said at least one subscribing customer, in response to said message signal.

2. A method as claimed in claim **1** wherein transmitting includes transmitting a representation of said at least one of quantity, type and content of said messages, in said message waiting signal.

3. A method as claimed in claim **1** further including determining from said message signal the source of at least one of said messages.

4. A method as claimed in claim **3** wherein transmitting includes transmitting in said message waiting signal a representation of said source of at least one of said messages.

5. A method as claimed in claim **1** further including receiving and storing said messages at said at least one messaging platform.

6. A method as claimed in claim 1, further comprising:
a) receiving said message waiting signal at a telephony device;
b) determining said at least one of quantity, type and content from said message waiting signal; and
c) providing an indication of said at least one of quantity, type and content to said subscribing customer.

7. A method as claimed in claim **6** wherein providing includes displaying said at least one of quantity, type and content of at least one of said messages available.

8. A method as claimed in claim **7** further including communicating said at least one of quantity, type and content to a paging services provider.

9. A method as claimed in claim **8** wherein communicating includes selectively communicating said at least one of said quantity, type and content in response to at least part of said message waiting signal.

10. A method as claimed in claim **1** further including determining from at least some content, calling line identification information.

11. A method as claimed in claim **10** further including transmitting in said message waiting signal a representation of said calling line identification information.

12. A method comprising:
a) receiving a message waiting signal representing at least one of quantity and type and content of messages available from at least one messaging platform for a subscribing customer;
b) determining said at least one of quantity, type and content from said message waiting signal; and
c) providing an indication of said at least one of quantity, type and content to said subscribing customer.

13. A method as claimed in claim **12** wherein providing includes displaying said at least one of quantity, type and content of at least one of said messages available.

14. A method as claimed in claim **12** further including communicating said at least one of quantity, type and content to a paging services provider.

15. A method as claimed in claim **14** wherein communicating includes selectively communicating said at least one of said quantity, type and content in response to at least part of said message waiting signal.

16. An apparatus comprising:
a) a message indication receiver for receiving from at least one messaging platform, a message signal representing at least one of quantity and type and content of messages available for at least one subscribing customer; and
b) a message waiting signal transmitter for transmitting a message waiting signal to said at least one subscribing customer in response to said message signal.

17. An apparatus as claimed in claim **16** wherein said transmitter is operable to include in said message waiting signal a representation of said at least one messaging platform at which said messages are waiting.

18. An apparatus as claimed in claim **16** wherein said transmitter is operable to include in said message waiting signal, a representation of at least one of quantity, type and content of at least one of said messages available.

19. An apparatus as claimed in claim **16** wherein said message indication receiver is operable to determine, from at least some content, calling line identification information.

20. An apparatus as claimed in claim **19** wherein said transmitter is operable to include said calling line identification information in said message waiting signal.

21. An apparatus as claimed in claim **16** further including a central office, said message indication receiver and said message waiting signal transmitter being provided by said central office.

22. A system comprising the apparatus as claimed in claim **16** and further comprising at least one messaging platform for receiving and storing messages for said at least one subscribing customer.

23. A system as claimed in claim **22** wherein said at least one messaging platform is provided by a central office.

24. An apparatus comprising:
a) means for receiving a message signal representing at least one of quantity, type and content of messages available at at least one messaging platform for at least one subscribing customer; and
b) means for transmitting a message waiting signal to a remote device for notifying at least one subscribing customer of at least one of quantity, type and content of said messages.

25. A system including the apparatus claimed in claim **16** further including a telephony device comprising:
a) a message waiting signal receiver for receiving said message waiting signal; and
b) an indicator in communication with said message waiting signal receiver for providing an indication of said at least one of said quantity, type and content of at least one of said messages available.

26. A system as claimed in claim **25** further including a processor circuit and wherein said indicator includes a display, controlled by said processor circuit to display said at least one of quantity, type and content of at least one message available from at least one of said at least one messaging platforms.

27. A system as claimed in claim **25** further including means for communicating said message waiting signal to a remote device.

28. A system as claimed in claim **27** further including a processor circuit programmed to determine a source of said message waiting signal and wherein said means for communicating is operable to selectively communicate said message waiting signal to said remote device when said source meets a pre-specified condition.

29. A system as claimed in claim **27** wherein said means for communicating includes means for selectively paging in response to at least part of said message waiting signal.

30. A system as claimed in claim **25** further including means for communicating said at least one of said quantity, type and content to a remote device.

31. A system as claimed in claim **26** wherein said processor circuit is programmed to determine a source of said message waiting signal and to display said source of said message.

32. A system as claimed in claim **26** wherein said processor circuit is programmed to determine calling line identification information from said message waiting signal and wherein said display is controlled by said processor circuit to display said calling line identification information.

33. A system including the apparatus claimed in claim **24** and further including:
a) means for receiving said message waiting signal;
b) means for determining said at least one of quantity, type and content from said message waiting signal; and
c) means for providing an indication of said at least one of quantity, type and content to said at least one subscribing customer.

34. A telephony device comprising:
a) a message waiting signal receiver for receiving a message waiting signal representing at least one of quantity, type and content of at least one message available at a messaging platform; and
b) an indicator in communication with said message waiting signal receiver for providing an indication of at least one of quantity, type and content in response to said message waiting signal.

35. A telephony device as claimed in claim **34** further including a processor circuit and wherein said indicator includes a display, controlled by said processor circuit to display said at least one of quantity, type and content of at least one message available from at least one of said at least one messaging platforms.

36. A telephony device as claimed in claim **34** further including means for communicating said message waiting signal to a remote device.

37. A telephony device as claimed in claim **36** further including selectively communicating said message waiting signal to said remote device when said source meets a pre-specified condition.

38. A telephony device as claimed in claim **36** wherein said means for communicating includes means for selectively paging in response to at least part of said message waiting signal.

39. A telephony device as claimed in claim **34** further including means for communicating said at least one of said quantity, type and content to a remote device.

40. A telephony device as claimed in claim **35** wherein said processor circuit is programmed to determine a source of a message waiting signal and to display an indication of said source of said message.

41. A telephony device as claimed in claim **35** wherein said processor circuit is programmed to determine calling line identification information from said message waiting signal and wherein said display is controlled by said processor circuit to display said calling line identification information.

42. A telephony device comprising:
a) means for receiving a message waiting signal representing an indication of at least one of quantity, type and content of at least one message available at at least one messaging platform;
b) means for determining said at least one of quantity, type and content from said message waiting signal; and
c) means for providing an indication of said at least one quantity, type and content to said at least one subscribing customer.

43. An apparatus comprising:
a) a signal receiver for receiving a message waiting signal representing messages available from at least one messaging platform; and
b) a communications device for establishing communications with said messaging platform to receive said message in response to said message waiting signal.

44. An apparatus as claimed in claim **43** wherein said communications device is operable to receive a voice message.

45. An apparatus as claimed in claim **43** wherein said communications device is operable to receive a data message.

46. An apparatus as claimed in claim **43** wherein said communications device is operable to receive an email message.

47. An apparatus as claimed in claim **43** wherein said signal receiver includes a processor circuit for determining, from said message waiting signal an indication of a messaging platform at which a message is available.

48. An apparatus as claimed in claim **47** wherein said processor is programmed to determine at least one of quantity and type of at least one message from said message waiting signal and wherein said indicator includes a display controlled by said processor circuit to display said at least one of quantity and type of messages available from said at least one messaging platform.

49. An apparatus as claimed in claim **43** further including means for communicating at least one of said indication and said message to a remote device.

50. A method comprising:
a) receiving a message waiting signal representing messages available from at least one messaging platform;
b) establishing communications with said messaging platform to receive said message in response to said message waiting signal.

51. A method as claimed in claim **50** wherein establishing communications includes receiving a voice message.

52. A method as claimed in claim **50** wherein establishing communications includes receiving a data message.

53. A method as claimed in claim **50** wherein establishing communications includes receiving an email message.

54. A method as claimed in claim **50** further including determining, from said message waiting signal an indication of a messaging platform at which a message is available.

55. A method as claimed in claim **54** further including communicating said message to a remote device.
